# EUROPEAN PATENT APPLICATION

(11) **EP 4 015 115 A1**
(43) Date of publication of application: **22.06.2022**
(21) Application number: 20020620.9
(22) Date of filing: 15.12.2020
(51) Int. Cl.: B22F 12/10, B22F 12/20, B22F 12/70, B29C 64/364, B33Y 10/00, B33Y 30/00, B33Y 40/00, B33Y 50/02, B01D 53/00, B01D 53/26

(54) **APPARATUS AND METHOD FOR DEHUMIDIFYING AN ADDITIVE MANUFACTURING SPACE**

(71) Applicant: Linde GmbH, 82049 Pullach (DE)
(72) Inventor: Walter, Mark Veldsman, Guildford, GU4 7FA (GB); Glen, Graydon, Llangennech, Llanelli SA14 8YE (GB)
(74) Representative: Gellner, Bernd

(57) **Abstract**

According to the present invention an apparatus for additive manufacturing is provided. This apparatus comprises a process chamber, a base material delivery system, a building plate, a heat source for melting the base material and a circulation device for circulating a process gas atmosphere through the process chamber having a circulation pipe, wherein a heat exchanger is integrated in the circulation pipe, and wherein the heat exchanger has a heat transfer surface, with which the process gas atmosphere is in contact and which is cooled by a liquid inert cryogen for causing the moisture in the process gas atmosphere to crystallize.

## Description

The present invention relates to an apparatus and to a method for dehumidifying an additive manufacturing space.

With additive manufacturing (AM) procedures it is possible to produce three-dimensional components with complex geometries as well as to process existing ones.

The concept of AM is also known as generative manufacturing, 3D-printing and rapid-technologies. It is a comprising description for all methods which produce three-dimensional components while applying layer by layer of a certain material. The applying of the layers is working computer controlled and multiple fluid or solid materials are combined after previously defined measure and shape. The measures and shapes are usually designed by a computer aided design (CAD-) program. The whole production is therefore an interaction of physical or chemical melting and hardening processes.

The materials that are used range from plastics to resins to metals, ceramics and carbon compounds.

In industry and research AM is getting more and more important. The 3D-printing method is often used for producing models, templates and first prototypes with applications architecture, engineering, automotive, medical industries, biotech and so on. But also serial parts are produced in this way. Besides, there are also applications in the home, entertainment and art sectors.

In comparison to conventional casting procedures in which a complete part is produced from raw materials by a melting process, AM-processes have the advantage that yet used tools and moulds are not needed anymore. In addition, support structures can be dispensed with, since the components are supported by the starting material. This saves product launch times and storage costs.

Furthermore, you have great freedom in terms of geometry which enables the manufacturing of components that cannot be produced with form-based processes or can only be produced with great effort. It is for example possible to produce components with undercuts.

The main differences between processes for AM are in the way layers are deposited to create parts and in the materials that are used. Some methods melt or soften the material to produce the layers, for example selective laser melting (SLM), selective laser sintering (SLS), electron-beam melting (EBM), fused deposition modeling (FDM), or fused filament fabrication (FFF), while others cure liquid materials using different sophisticated technologies.

Selective laser melting (SLM) is a particular rapid prototyping, 3D-printing, or Additive Manufacturing technique designed to use a high power-density laser to melt and fuse metallic powders together. With SLM, thin layers of atomized fine metal powder are evenly distributed using a coating mechanism onto a substrate plate, usually metal, that is fastened to an indexing table that moves in the vertical (Z) axis. Once each layer has been distributed, each 2D-slice of the part geometry is fused by selectively melting the powder. The process is repeated layer after layer until the part is complete.

Selective laser sintering (SLS) is an additive manufacturing technique that uses a laser as the power source to sinter powdered material, aiming the laser automatically at sections in space defined by a 3D-model, binding the material together to create a solid structure. SLM uses a comparable concept, but in SLM the material is fully melted rather than sintered, allowing different properties (crystal structure, porosity, and so on). The laser selectively fuses powdered material by scanning cross-sections generated from a 3D-digital description of the part (for example from a CAD file or scan data) on the surface of a powder bed. After each cross-section is scanned, the powder bed is lowered by one-layer thickness, a new layer of material is applied on top, and the process is repeated until the part is completed.

Electron-beam additive manufacturing or electron-beam melting (EBM) is a type of additive manufacturing, or 3D-printing, for metal parts. The raw material (metal powder or wire) is placed under a vacuum and fused together from heating by an electron beam. This technique is similar to SLM but EBM has a generally superior build rate because of its higher energy density and scanning method.

Another approach is to use an electron beam to melt welding wire (Metal wire-based systems; wire arc additive manufacturing (WAAM)) onto a surface to build up a part.

This is similar to the common 3D-printing process of fused deposition modeling, but with metal, rather than plastics. With this process, an electron-beam gun provides the energy source used for melting metallic feedstock, which is typically wire. This process is repeated in a layer-by-layer fashion, until the desired 3D-shape is produced.

Laser Metal Deposition (LMD), alternatively known as near net shape, is a process which uses a high-power laser beam, connected to a robot or gantry system, to form a melt pool on a metallic substrate into which powder or metal wire is fed.

Laser metal fusion processes take place in a process chamber that is filled with a process gas. Usually, an inert gas is used, in which the contaminants must be strictly controlled. For example, the oxygen content may not exceed a certain threshold between 1 ppm and 1000ppm. Another example of contamination is the moisture present in the process space, which also needs to be tightly controlled. Further examples of impurities are nitrogen, hydrogen, CO₂ and other gases.

All metallic build processes require low moisture levels in the build chambers to ensure that moisture will not chemically breakdown into hydrogen and oxygen in the build chamber, both these gases can be detrimental to the 3D product being built or printed.

When a process chamber of an additive manufacturing device is opened to remove a manufactured component in order to begin production of a new component, ambient air enters the process chamber. This ambient air must be removed by purging the chamber with inert gas until an oxygen content has dropped to a certain threshold. The purging gas is introduced into the process chamber via one or more gas inlets. The purging of the chamber takes a relatively long time, especially when the threshold levels of impurities are low.

Current purging and gas shield methods are insufficient in that the oxygen and moisture levels are relatively high at the beginning of the process even though a purge cycle has taken place. The purge cycle takes a long time and reduces the efficiency of the additive manufacturing process in that no building process can take place till the purge cycle is undertaken to bring the oxygen level below a certain threshold for example 6000 ppm oxygen level.

Documents DE 196 49 865 C1, WO 2014/199150 A1 and EP 3 219 416 A1 disclose devices and methods for purging a process chamber with for example gaseous argon.

Current methods of control include drawing a vacuum in the chamber and then introducing clean Argon or Nitrogen with low moisture levels or purging the chamber with argon or nitrogen to reduce the moisture levels.

It is an object of the present invention to provide an improved apparatus and an improved method for purging an additive manufacturing space.

It is a further object of the present invention to provide an apparatus and a method for purging an additive manufacturing space wherein oxygen and/or moisture levels in the manufacturing space can be reduced efficiently.

Furthermore, it is an object of the present invention to provide an apparatus and a method for purging an additive manufacturing space which reduces the purging time.

One or more of these problems are solved by an apparatus according to independent claim 1 and by a method according to claim 11. Advantageous embodiments are defined in the sub-claims.

According to the present invention an apparatus for additive manufacturing is provided. This apparatus comprises a process chamber, a base material delivery system, a building plate, a heat source for melting the base material and a circulation device for circulating a process gas atmosphere through the process chamber having a circulation pipe, wherein a heat exchanger is integrated in the circulation pipe, and wherein the heat exchanger has a heat transfer surface, with which the process gas atmosphere is in contact and which is cooled by a liquid inert cryogen for causing the moisture in the process gas atmosphere to condense.

An uncontrollable and a too high level of moisture is a problem during additive manufacturing processes because the moisture can chemically breakdown into hydrogen and oxygen and both gases can be detrimental to the 3D product being built or printed. The moisture can cause defects in the produced components like flaws in material transitions. Especially while opening the process chamber for removing done components or for filling up base material the level of moisture is increasing and is too high for further processes.

Since the heat exchanger is integrated in the circulation pipe which is cooled by a liquid inert cryogen the moisture in the process gas atmosphere is caused to condense.

The liquid inert cryogen allows a fast and efficient dehumidifying of a process gas atmosphere. Thereby high quality printed or built parts can be provided.

According to this the heat exchanger uses a cryogenic liquid for cooling for the purpose of causing the moisture in the process gas atmosphere to condense on the heat transfer surface.

The use of the heat exchanger makes it possible to reduce the moisture level inside the process chamber in a fast and efficient way. This leads to that further additive manufacturing processes can be carried out earlier, which means that the productivity of the apparatus is increased. Thereby time and money can be saved.

Preferably the heat exchanger is a cryogenic dehumidifier which can comprise a housing with a cooling space and a dehumidifying space, which are separated by the heat transfer surface, a feeding device for feeding the liquid inert cryogen to the cooling space wherein the dehumidifying space is connected to the circulation pipe, and a water outlet for draining fluid water from the dehumidifying space.

By the water outlet the condensed water of the process gas atmosphere can be drained away easily.

Furthermore, a pump for circulating the process gas atmosphere and/or a heating device for heating up the process gas atmosphere before entering the process chamber which are integrated in the circulation pipe can be provided.

With the heating device the process gas atmosphere can be heated prior to the air entering the build chamber again.

The condensed water on the heat transfer surface mostly forms ice crystals. After dehumidifying the air in the dehumidifying space of the dehumidifier can be heated with the heating device for carrying out a corresponding heating cycle. Ice crystals can be removed intermittently by the heating cycle. The corresponding water will be drained away via the water outlet and the dehumidifying function can continue.

The pump can either be used for heating up the process gas atmosphere before entering the building space and/or for circulating the process gas atmosphere in order to dehumidify it.

The heat exchanger can be a double walled tubular pipeline system, wherein an inner tube forms the cooling space and wherein the liquid inert cryogen is led in the cooling space and wherein a space between the outer surface of the inner tube and a big inner surface of an outer tube forms the dehumidifying space, and wherein the process gas atmosphere is circulated through the dehumidifying space.

Preferably the construction of the pipeline is such that the cryogenic liquid is kept inside the inner tube and the low cryogenic temperature travels through the wall of the inner tube, which is the heat transfer surface, to the outside surface of the inner tube. The air (process gas atmosphere) from the build chamber is drawn into the outer tube and travels between the outer surface of the inner tube and the inner surface of the outer tube so that the cryogenic temperatures on the outer surface of the inner tube will cause the moisture in the air travelling over the heat transfer surface to condense out. Thus, the moisture level of the air leaving the tube and going back into the build chamber is reduced.

The whole structure with the heat exchanger outside the process chamber, the circulation pipe, the pump and the heating device for heating up the process gas atmosphere before entering the process chamber leads to that the temperature of the process gas atmosphere inside the process chamber is almost constant. This means that there are no big temperature gradients inside the process chamber, which could lead to issues during the welding process.

Additionally, a first valve can be disposed between the process chamber and the heat exchanger and a second valve can be disposed between the heat exchanger and the process chamber for disconnecting the process chamber from the circulation pipe can.

The first and second valve of the process chamber make it possible to disconnect the process chamber from the circulation pipe at every time. For example, if the moisture inside the process chamber is under a specific level the process atmosphere inside the process chamber can be kept at that level by closing the first and second valve.

Furthermore a bypass pipe bypassing the process chamber can be provided, wherein the circulation pipe is either connected to the process chamber or the bypass pipe and wherein a first bypass valve between the circulation pipe and the bypass pipe and a second bypass valve between the bypass pipe and the circulation pipe is provided for connecting the bypass pipe to the circulation pipe.

With the bypass pipe it is possible to start a separate heating cycle instead of a cycle for dehumidifying the process gas atmosphere. For this the feeding of liquid inert cryogen to the cooling space of the heat exchanger is stopped and the first and second valve of the process chamber are closed. Thereby the process chamber is a closed area. Then the first and second bypass valve are opened. Thus, a cycle via the heat exchanger, the circulation pipe and the bypass pipe is provided. By this the air is heated up by the heating device of the circulation pipe and is used to defrost the dehumidifying space of the heat exchanger. By opening of the water outlet, the resulting water drains out.

With this construction of an extra heating cycle it is basically possible to start the heating cycle for defrosting the dehumidifying space of the heat exchanger after an additive manufacturing process in the process chamber or while an additive manufacturing process is taking place.

The extra heating cycle makes the defrosting of the dehumidifying space of the heat exchanger more efficient because a lower air volume needs to be heated up by the heating device.

The first valve and the first bypass valve and/or the second valve and the second bypass valve can also be replace by a 3/2 way valve.

For analyzing the process gas atmosphere inside the process chamber a measuring device can be provided.

A control unit can be connected to the measuring device, the feeding device and the valves and wherein the control unit is embodied for controlling an amount of moisture inside the process chamber.

As mentioned above an uncontrollable and a too high level of moisture is a big issue during additive manufacturing processes. On the other side a specific amount of oxygen and hydrogen is important for a good result of the components because they are needed for melting and welding the material. The observing an controlling of the amount of oxygen and hydrogen inside the process chamber is an important step to get good results. With the control unit it is possible to control the essential functions for getting a specific amount of oxygen and hydrogen inside the process chamber. A controllable amount is further maximizing the quality of the component to be manufactured.

The apparatus is preferably an apparatus for an additive manufacturing process with a powder bed or for an additive manufacturing process with a wire feeding. According to this the heat source can be embodied for providing a laser- or a plasma beam. Corresponding additive manufacturing methods are disclosed in the introductory part.

With almost all techniques of additive manufacturing the reducing of moisture before starting a new manufacturing process is necessary. In particular if the process chamber is opened before starting the next process. The use a heat exchanger for reducing the moisture inside the process chamber is applicable for all of these techniques.

Preferably the liquid inert cryogen is liquid Nitrogen, liquid Carbon dioxide, liquid Argon or liquid Helium.

According to the present invention a method for additive manufacturing is provided, in particular with an apparatus explained above. The method comprises the circulating of a process gas atmosphere through a process chamber with a circulation device, the reducing of the moisture in the process gas atmosphere with a heat exchanger of the circulation device, wherein the process gas atmosphere is circulated through a dehumidifying space of the heat exchanger, and wherein a heat transfer surface is cooled by a liquid inert cryogen.

The method can comprise the further steps:
Providing of a base material on a building plate in the process chamber and the melting of the base material with a heat source.

Heating up the circulated process gas atmosphere with a heating device before entering the process chamber.

Disconnecting the process chamber from the circulation device via corresponding valves,
Bypassing the process chamber with a bypass pipe,
Providing warm atmosphere with the heating device,
Starting a heating cycle wherein the heated atmosphere is circulated through the dehumidifying space so that the dehumidifying space is defrosted.

Measuring moisture in the process gas atmosphere with the measuring device xx and Controlling the feeding device, the heating device, the first valve, the second valve, the first bypass valve and the second bypass valve based on the measured values of the moisture with the control unit 23.

The advantages of the apparatus described above apply analogues for the corresponding method.

Further tasks, features and advantages of the present invention will get apparent from the description and the exemplary embodiment that is shown in the attended drawing. This shows in:

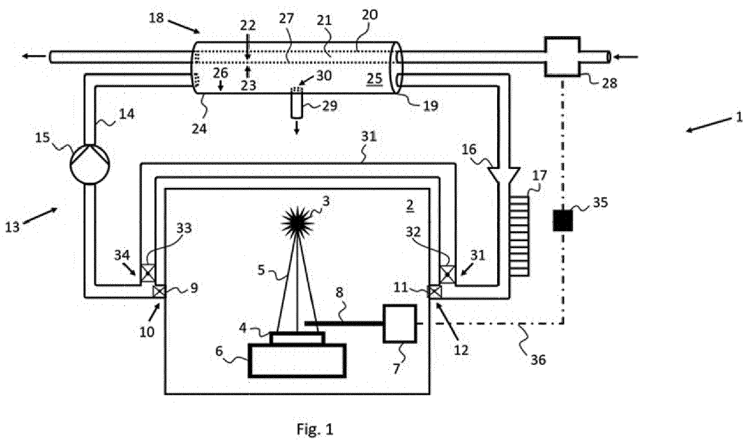

Fig. 1 a schematic view of an apparatus according to the present invention.

Hereinafter an exemplary embodiment of an apparatus for additive manufacturing 1 according to the present invention is explained in detail (Fig. 1).

The apparatus 1 according to the present invention comprises a process chamber 2 and a circulation device 13 with an integrated heat exchanger 18.

The apparatus 1 can carry out an additive manufacturing powder bed process or an additive manufacturing process with wire feeding.

A heat source 3 for melting a base material 4 is arranged within the process chamber 2. The heat source 3 preferably generates a laser- or a plasma beam 5 for melting the base material 4.

Furthermore a building plate 6 for providing the base material 4 is disposed inside the process chamber 2.

For providing the base material 4 on the building plate 6 a base material delivery system (not shown) is provided, which is preferably a wire feeding device or a powder delivery device.

A measuring device 7 inside the process chamber 2 comprises a sensor 8 and is embodied for measuring the amount of moisture inside the process chamber 2 preferably at the position where the additive manufacturing process takes place. Additionally, a sensor can be provided for measuring the oxygen level inside the process chamber 2.

The process chamber 2 comprises a first valve 9 and a second valve 11 for disconnecting the process chamber 2 from a circulation pipe 14. The first valve 9 is disposed at a first connection section 10 between the process chamber 2 and the circulation pipe 14 in an area where the process gas atmosphere leaves the process chamber 2. The second valve 11 is disposed at a second connection section 12 between the circulation pipe 14 and the process chamber 2 in an area where the process gas atmosphere enters the process chamber 2.

The circulation device 13 is provided for circulating a process gas atmosphere through the process chamber 2.

For leading the process gas atmosphere, the circulation device 13 comprises the circulation pipe 14.

The heat exchanger 18 is integrated in the circulation pipe 14 wherein the circulation pipe 14 is connected to the process chamber 2 and a dehumidifying space 25 of the heat exchanger 18.

The heat exchanger 18 is a cryogenic dehumidifier which comprises a housing 19, a cooling space 21, the dehumidifying space 25, a feeding device 28 for feeding liquid inert cryogen to the cooling space 21, and a water outlet 29 for draining fluid water from the dehumidifying space 25, and wherein the cooling space 21 and the dehumidifying space 25 are separated by a heat transfer surface 27.

The heat exchanger 18 is embodied as a double walled tabular pipeline system. An inner tube 20 is provided for conducting the cryogenic liquid, which forms the cooling space 21.

A space between the outer surface 23 of the inner tube and an inner surface 26 of an outer tube forms the dehumidifying space 25. The process gas atmosphere is circulated through the dehumidifying space 25.

The low cryogenic temperature travels through the wall of the inner tube 20, wherein the wall of the inner tube 20 is the heat transfer surface 27. The process gas atmosphere is drawn into the double walled tubular pipeline system and travels between the outer surface 23 of the inner tube 20 and the inner surface 26 of the outer tube 24 which forms the dehumidifying space 25, so that the cryogenic temperatures on the outer surface 23 of the inner tube 20 will cause the moisture in the air travelling over the outer surface 23 of the inner tube 20 to condense out thus reducing the moisture level of the process gas atmosphere.

In the circulation pipe 14 a pump 15 is integrated for pumping the process gas atmosphere through the circulation pipe 14.

Furthermore, a heating device 17 is integrated in the circulation pipe 14 and is provided to heat up the process gas atmosphere before entering the process chamber 2.

The feeding device 28 is connected to a liquid inert cryogen source (not shown) for providing a liquid inert cryogen to the feeding device 28. The feeding device 28 can control the amount of liquid inert cryogen to the cooling space 21.

The water outlet 29 of the dehumidifying space 25 has a water outlet valve 30.

The apparatus 1 preferably comprises a bypass pipe 31 around the process chamber 2. The bypass pipe 31 is an extension of the circulation pipe 14 which is connected to the circulation pipe 14 at a first bypass connection section 33 short before the process gas atmosphere enters the process chamber 2 and is connected to the circulation pipe 14 at a second bypass connection section 35 short after the process gas atmosphere leaves the process chamber 2.

The bypass pipe 31 comprises a first bypass valve 32 which is at the first bypass connection section 33 between the circulation pipe 14 and the bypass pipe 31 and a second bypass valve 34 which is at the second bypass connection section 35 between the circulation pipe 14 and the bypass pipe 31.

With the bypass pipe 31 it is possible to start a heating cycle for defrosting the dehumidifying space 25 of the heat exchanger 18 wherein either a dehumidifying cycle through the process chamber 2 or the heating cycle around the process chamber 2 is carried out.

For controlling the performance of the heat exchanger 18 depending on the amount of moisture inside the process chamber 2 the apparatus 1 shows a control unit 36.

The control unit 36 for controlling the performance of the heat exchanger 18 depending on the amount of moisture inside the process chamber 2 is connected to the measuring device 7 of the process chamber 2, the feeding device 28 of the heat exchanger 18 and the heating device 17 integrated in the circulation pipe 14 via corresponding control lines 37.

In the following a method for additive manufacturing 1 using the apparatus described above is discussed.

The pump 15 of the circulation device 13 pumps the process gas atmosphere through the circulation pipe 14 in a cycle through the process chamber 2 and the dehumidifying space 25 of the heat exchanger 18.

Inside the heat exchanger 18 the process gas atmosphere streams through the dehumidifying space 25 and the process gas atmosphere is in contact with the heat transfer surface 27 between the dehumidifying space 25 and the cooling space 21.

The cooling space 21 is filled by the liquid inert cryogen to cool down the heat transfer surface 27 to a temperature close to the temperature of the liquid inert cryogen. Thus, the water molecules in the process gas atmosphere inside the dehumidifying space 25 condense and crystallize on the heat transfer surface 27.

This leads to that the process gas atmosphere which flows back to the process chamber 2 includes less moisture.

During this process for reducing the moisture inside the process chamber 2 the first valve 9 and the second valve 11 of the process chamber 2 are opened. The first bypass valve 32, the second bypass valve 34 and the water outlet valve 30 of the water outlet 29 are closed.

The control unit 36 is connected to the measuring device 7 of the process chamber 2, the feeding device 38 of the heat exchanger 18 and the heating device 17 integrated in the circulation pipe 14 via the electric lines 37, wherein the control unit 36 receives measuring data from the measuring device 7 and analyses these measured data. Depending on the measured data the control unit 36 controls the volumetric flow rate of the process gas atmosphere and/or how much liquid inert cryogen is fed to the cooling space 21 by the feeding device 38 and thus the control unit 36 controls the performance of the heat exchanger 18.

If necessary because there is too much ice at the heat transfer surface 27 inside the heat exchanger 18 or if the moisture inside the process chamber 2 is below a defined level the heating cycle can be started.

For the heating cycle the feeding of liquid inert cryogen to the cooling space 21 of the heat exchanger 18 will be stopped and the first valve 9 and the second valve 11 of the process chamber 2 will be closed to seal off the process chamber 2 from the circulation pipe 14. Then the first bypass valve 32 and the second bypass valve 34 will be opened to connect the bypass pipe 31 to the circulation pipe 14. The heating device 17 which is still part of the heating cycle heats up the now lower volume of former process gas atmosphere to defrost the dehumidifying space 25 of the heat exchanger 18. To drain out the resulting water the water outlet valve 30 of the water outlet 29 will be opened.

Then the base material 4 is provided on the building plate 6 in the process chamber 2 and the additive manufacturing process can be started. The base material 4 can be a powder material for an additive manufacturing powder bed process or a wire for an additive manufacturing process with wire feeding.

I the moisture in the building chamber exceeds a certain threshold value the additive manufacturing process can be stopped, and the steps mentioned above can be carried out again.

A method according to the present invention has essentially already been discussed above. Such a method can be summarized as follows comprising the following steps:
- Circulating a process gas atmosphere through a process chamber 2 with a circulation device ,
- Reducing the moisture in the process gas atmosphere with a heat exchanger 15 of the circulation device 11, wherein the process gas atmosphere is circulated through a dehumidifying space of the heat exchanger, and wherein a heat transfer surface is cooled by a liquid inert cryogen.
- Providing a base material 4 on a building plate xx in the process chamber 2 and Melting the base material 4 with a heat source 3.

- Heating up the circulated process gas atmosphere with a heating device xx before entering the process chamber 2.

- Disconnecting the process chamber from the circulation device via corresponding valves,
- Bypassing the process chamber with a bypass pipe,
- Circulating the process gas atmosphere,
- Starting a heating cycle by heating up the process gas atmosphere wherein the heated atmosphere is circulated through the dehumidifying space so that the dehumidifying space is defrosted.

- Measuring moisture in the process gas atmosphere with the measuring device 7, and
- Controlling the feeding device, the heating device, the first valve, the second valve, the first bypass valve and the second bypass valve based on the measured values of the moisture with the control unit 23.

### Reference signs

- 1: Apparatus
- 2: Process chamber
- 3: Heat source
- 4: Base material
- 5: Laser- or plasma beam
- 6: Building plate
- 7: Measuring device
- 8: Sensor
- 9: First valve
- 10: First connection section
- 11: Second valve
- 12: Second connection section
- 13: Circulation device
- 14: Circulation pipe
- 15: Pump
- 16: Flow direction
- 17: Heating device
- 18: Heat exchanger
- 19: Housing
- 20: Inner tube
- 21: Cooling space
- 22: Inner surface
- 23: Outer surface
- 24: Outer tube
- 25: Dehumidifying space
- 26: Inner surface
- 27: Heat transfer surface
- 28: Feeding device
- 29: Water outlet
- 30: Water outlet valve
- 31: Bypass pipe
- 32: First bypass valve
- 33: First bypass connection section
- 34: Second bypass valve
- 35: Second bypass connection section
- 36: Control unit
- 37: Electric Line

## Claims

1. Apparatus for additive manufacturing comprising
a process chamber (2),
a base material delivery system,
a building plate (6),
a heat source (3) for melting the base material (4) and
a circulation device (10) for circulating a process gas atmosphere through the process chamber (2) having a circulation pipe (11),
wherein
a heat exchanger (15) is integrated in the circulation pipe (11), and wherein the heat exchanger (15) has a heat transfer surface (19), with which the process gas atmosphere is in contact and which is cooled by a liquid inert cryogen for causing the moisture in the process gas atmosphere to crystallize.

2. Apparatus according to claim 1,
**characterized in that**,
the heat exchanger (15) is a cryogenic dehumidifier comprising
a housing with,
a cooling space, and
a dehumidifying space, which are separated by the heat transfer surface (19),
a feeding device (20) for feeding the liquid inert cryogen to the cooling space
wherein the dehumidifying space is connected to the circulation pipe (11), and
a water outlet (21) for draining fluid water from the dehumidifying space.

3. Apparatus 1 according to claim 1 or 2,
**characterized in that**,
a pump (12) for circulating the process gas atmosphere and/or a heating device (14) for heating up the process gas atmosphere before entering the process chamber (2) are integrated in the circulation pipe (11).

4. Apparatus 1 according to one of the claims 1 to 3,
**characterized in that**,
the heat exchanger (15) is a double walled tubular pipeline system,
wherein an inner tube (20) forms the cooling space (21) and wherein the liquid inert cryogen disposed in the cooling space (21),
wherein a space between the outer surface (23) of the inner tube (20) and an inner surface (26) of an outer tube (24) forms the dehumidifying space, and
wherein the process gas atmosphere is circulated through the dehumidifying space (25).

5. Apparatus 1 according to one of the claims 1 to 4,
**characterized in that**,
a first valve (9) is disposed between the process chamber (2) and the heat exchanger and a second valve (11) is disposed between the heat exchanger (18) and the process chamber (2) for disconnecting the process chamber (2) from the circulation pipe 11.

6. Apparatus 1 according to one of the claims 1 to 5,
**characterized in that**,
a bypass pipe (31) bypassing the process chamber 2 is provided,
wherein the circulation pipe (11) is either connected to the process chamber (2) or the bypass pipe (31) and
wherein a first bypass valve (32) between the circulation pipe (11) and the bypass pipe (31) and a second bypass valve (34) between the bypass pipe (31) and the circulation pipe (11) is provided for connecting the bypass pipe (31) to the circulation pipe (11).

7. Apparatus 1 according to one of the claims 1 to 6,
**characterized in that**,
a measuring device (7) is provided for analyzing the process gas atmosphere inside the process chamber (2).

8. Apparatus 1 according to one of the claims 1 to 7,
**characterized in that**,
a control unit (23) is connected to the measuring device (7), the feeding device (20) and the valves (9, 11, 32, 34) and wherein the control unit (23) is embodied for controlling an amount of moisture inside the process chamber (2).

9. Apparatus 1 according to one of the claims 1 to 8,
**characterized in that**,
the apparatus (1) is an apparatus for an additive manufacturing powder bed process or for an additive manufacturing process with a wire feeding and/or
wherein the heat source (3) is embodied for providing a laser- or a plasma beam (5).

10. Apparatus 1 according to one of the claims 1 to 9,
**characterized in that**,
the liquid inert cryogen is liquid Nitrogen, liquid Carbon dioxide, liquid Argon or liquid Helium.

11. Method for additive manufacturing, in particular with an apparatus 1 according to one of the claims 1 to 10, comprising the following steps,
Circulating a process gas atmosphere through a process chamber (2) with a circulation device (10),
Reducing the moisture in the process gas atmosphere with a heat exchanger (15) of the circulation device (11),
wherein the process gas atmosphere is circulated through a dehumidifying space (25) of the heat exchanger (15), and
wherein a heat transfer surface (27) of the heat exchanger (15) is cooled by a liquid inert cryogen.

12. Method according to claim 11,
comprising the further steps,
Heating up the circulated process gas atmosphere with a heating device (17) before entering the process chamber (2).

13. Method according to claim one of the claims 11 to 12,
**characterized in that**,
Disconnecting the process chamber (2) from the circulation device (13) via corresponding valves (9, 11, 32, 34),
Bypassing the process chamber (2) with a bypass pipe (31),
Starting a heating cycle wherein the heated atmosphere is circulated through the dehumidifying space (25) so that the dehumidifying space is defrosted.

14. Method according to one of the claims 11 to 13,
**characterized in that**,
Measuring moisture in the process gas atmosphere with the measuring device (7) and
Controlling the feeding device and/or the heating device (17) and/or the first valve (9) and/or the second valve (11) and/or the first bypass valve (31) and/or the second bypass valve (34) based on the measured values of the moisture with the control unit (23).

15. Method according to one of the claims 11 to 14,
**characterized in that**,
Providing a base material (4) on a building plate (6) in the process chamber (2) and Melting the base material (4) with a heat source (3).
